# EUROPEAN PATENT APPLICATION

(11) **EP 4 692 536 A1**
(43) Date of publication of application: **11.02.2026**
(21) Application number: 23930161.7
(22) Date of filing: 29.03.2023
(51) Int. Cl.: F03D 13/20, E04H 12/10

(54) **NEW TRANSITION PIECE FOR A WIND TURBINE**

(71) Applicant: Nabrawind Technologies, S.L., 31002 Pamplona (ES)
(72) Inventor: GARCÍA PÉREZ , Ana Cristina, 31621 Sarriguren-Egües (ES); SANZ PASCUAL, Eneko, 31002 Pamplona (ES); AROCENA DE LA RÚA, Ion, 31001 Pamplona (ES)
(86) International application number: PCT/ES2023/070201
(87) International publication number: WO 2024/200881

(57) **Abstract**

New transition piece for a wind turbine formed by a hollow cylindrical tubular segment (1) with multiple connected rings (1a, 1b, 1c, 1d, 1e), the upper part of the transition piece being the tower flange (11), the upper third comprising platforms (7, 8) and ribs (12) and the bottom part being a radial platform (9) with brackets. The transition piece also comprises three bracing posts (2), each comprising a bracing connector (4) and a corner connector (5), and six radial posts (3), which are horizontal tubes narrower than the bracing posts (2). The bracing connector (4) is a piece that connects the tubular segment (1) by means of an internally threaded joint into blind holes, and the upper part of the bracing joint (2) by means of a circular joint. The corner connector (5) is a piece with three joints: a first joint connecting to the bottom part of the bracing joint (2), a second joint connecting to the ground or to modules that complete a lower truss tower, and a third joint connecting to the two radial joints (3) that extend horizontally to the tubular segment (1). All the joints are circular joints. An X-shaped radial connector (6) is a cast iron piece with two joints: a joint connecting the tubular segment (1) by means of a flat joint, and a joint connecting the two radial posts (3) by means of a circular joint.

## Description

### Field of invention

The present invention describes a piece used to support a tubular tower and its corresponding wind turbine, consisting of the nacelle, hub, and blades. This piece can be the base of said wind turbine, anchored to the ground via its corresponding foundation, or it can be a transition piece to increase the tower's height by means of truss modules inserted through its lower part, forming a hybrid wind turbine with a tubular upper part.

### Background

From the existing state-of-the-art known and studied by the applicant, the following patents stand out:
Patent EP2944810A1 presents connections used in a lattice tower. These are primarily bolted shear connections and correspond to the tower's corner posts with the transverse elements.

Patent EP3369925A1 presents the connection between uprights, which are auxiliary legs, and the central pillar corresponding to the tubular tower of a wind turbine. The connection is presented by means of a closed curved structure 11 and a central crossbar 13, with a web 9 and a cap 10, where the cap of the upright is fixed to the central pillar.

Patent WO2021084143 presents a central truncated cone-shaped piece 7 attached to an upper ring 8 and a lower ring 9. These rings are in turn attached to radial and horizontal crossbars, which are joined by cast connectors. The radial beams 11 form a specific angle to better support loads.

The main differences between the new transition and the state-of-the-art are material and, consequently, cost savings. To achieve this, the cast connectors used to connect all the elements used in patent WO2021084143 are minimized, and the upper and lower rings and quadrangular horizontal beams are eliminated. The new castings are very small and preferably made of iron.

All elements are tubular to standardize manufacturing, without the need for design changes for quadrangular parts.

### Description

It is a transition platform for 5-6 MW wind turbines and is scalable to future 7 MW platforms with HH heights of 200 m.

The tubular segment is made up of several hollow segments joined together and is cylindrical, which improves its torsional aspect. It has reinforcing intercostals between two platforms, which are formed by plates arranged perpendicular to the tubular segment. The inner platforms of the tubular segment are work plates so that operators can easily bolt the rest of the elements that make up the transition.

The new transition is as low as possible to better support the existing loads due to the lean design of the tubular tower on which the nacelle and blades are mounted. It has a leg spacing ratio of 18 meters, compared to a height of 10 meters.

The leg connections are at ground level, rather than elevated, in cases where it serves as the base of the wind turbine and is anchored directly to the ground through its corresponding foundations.

All connections are bolted, with threaded holes that are bolted from the inside. Its circular connections are all shear connections.

From all of the above, the following advantages result:
- The overturning momentum due to the small diameter of the tower, which supports a large vertical force due to the weight of the nacelle and blades, is fully compensated by this tripod-type transition, with a greater leg spacing ratio than its height.
- Another advantage is that half the number of vehicles are needed to transport the new transition. From eight trucks, it is reduced to four. All parts can be transported on conventional trucks.

### Brief description of the drawings

A brief description will be given below for a series of drawings useful for better understanding the invention and that expressly relate to an embodiment of said invention that is presented as a non-limiting example thereof.
Figure 1 shows an elevation view Fig 1a and a plan view Fig 1b.
Figure 2 shows the interior of the tubular segment.
Figure 3 shows a section of the upper part of the tubular segment.
Figure 4 shows a section of the segment's connection to the bracing post.
Figure 5 shows a detail of the upper part of the segment from the outside.
Figure 6 shows a detail of the corner connector.
Figure 7 shows a detail of the radial connector seen from the top 7a and from the bottom 7b.
Figure 8 is a perspective view of the part of the invention.

### Detailed description

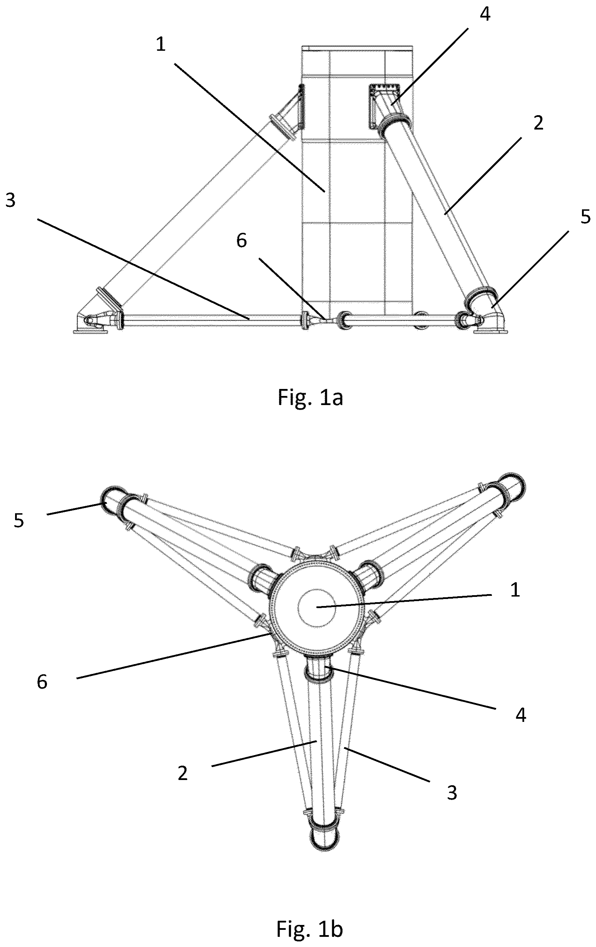

As shown in Figure 1, the transition is formed by:
- A hollow, cylindrical, tubular segment (1) formed by several connected rings (1a, 1b, 1c, 1d, 1e).
- Three bracing posts (2), each with a bracing connector (4) and a corner connector (5).
- Six radial posts (3), which are horizontal tubes narrower than the bracing posts (2).
- The bracing connector (4) is a cast piece that joins the top of the tubular segment (1) with a rectangular connection and the top of the bracing post (2) with a circular connection.
- The corner connector (5) is a cast piece with three connections: one to the bottom of the bracing post (2), another to the floor or to the modules that complete the lower truss tower, and the third to the two radial posts (3) that extend horizontally to the tubular segment (1). All connections are circular.
- The X-shaped radial connector (6) is a cast piece with two connections: one to the tubular segment (1) through a flat connection, and the other to the two radial posts (3) through a circular connection.

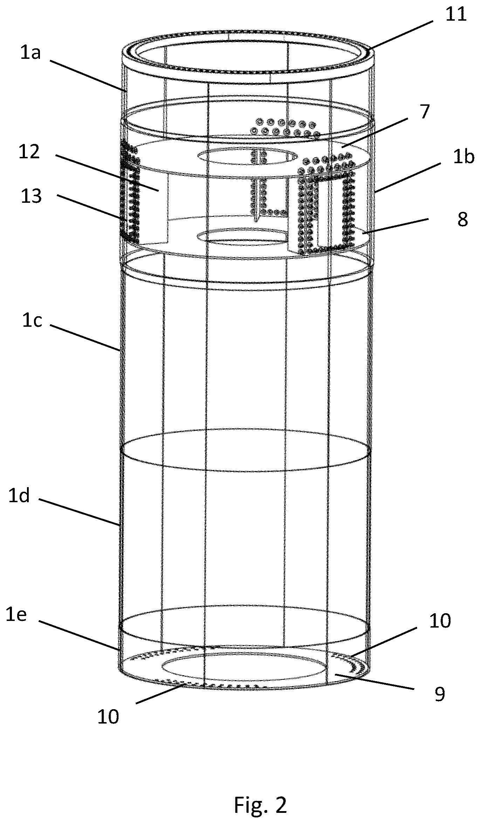

Figure 2 shows the hollow interior of the cylindrical element that forms the tubular segment (1). The ring (1a) is the upper ring and is connected to the tower flange (11). The ring (1b) is a thicker ring, with three quadrangular connection areas (13), two annular platforms (7, 8): one for the upper bracing (7) and one for the lower bracing (8), and several intercostal plates (12). The intercostal plates (12) are plates arranged perpendicular to the annular platforms (7, 8), such that each connection area (13) has the two annular platforms (7, 8) and two intercostal plates (12), and the connecting holes for the bolts are located around the edges. The rings (1c, 1d) are intermediate rings of constant thickness and are the tallest in the assembly. The ring (1e) is the lower ring and has a radial platform (9) with a larger diameter central hole, reinforced with several brackets (not shown in the drawing) and three sections of peripheral through holes (10). All platforms (7, 8, and 9) are annular, meaning they have an internal hole to allow the passage of the tension cables, the elevator, and the wind turbine maintenance ladder.

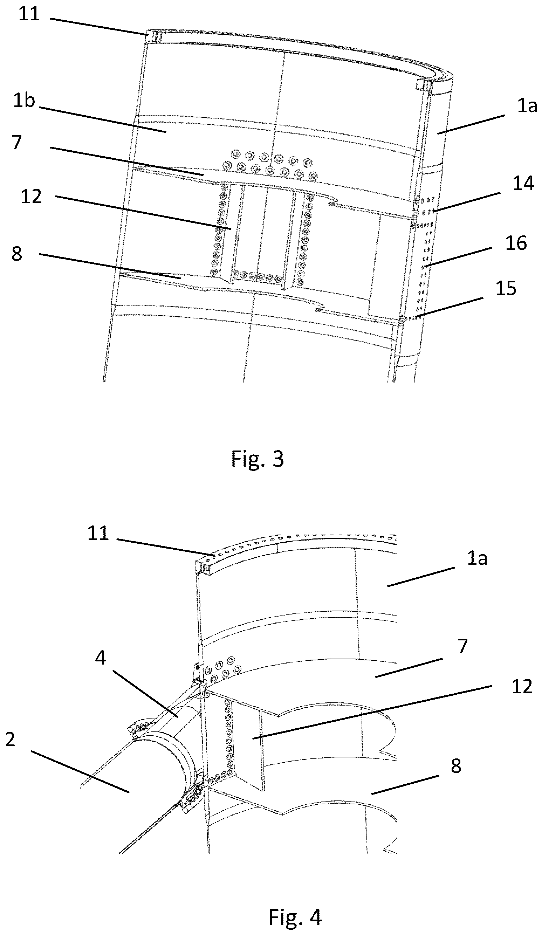

Figure 3 shows a section of the tower flange (11) crowning the top of the tubular segment (1). The thicker ring (1b) has a thicker wall to accommodate all the holes where the fixing screws are inserted. Bordering each of the quadrangular joining areas (13) are two lines of holes (14) above and one below the upper bracing platform (7). The lower bracing platform (8) only has holes (15) on its upper part, bordering each of the quadrangular joining areas (13). The intercostals (12) between platforms (7, 8) also have holes (16) on the sides bordering the aforementioned quadrangular area (13). Figure 4 shows the connection between the cast part of the bracing connector (4) with the bracing post (2) at one end, and with the upper part of the tubular segment (1) at the other end. All connections are bolted. At the end of the bracing post (2), there are circular flange-to-flange connections, and at the end of the tubular segment (1), these are through the upper holes (14), the side holes (16), and the lower holes (15). All holes are blind to prevent corrosion. For a good connection, the upper end of the bracing connector (4) has a concave rectangular shape to join the walls of the tubular segment (1). The intercostals (12) and the platforms (7, 8) inside reinforce the connection.

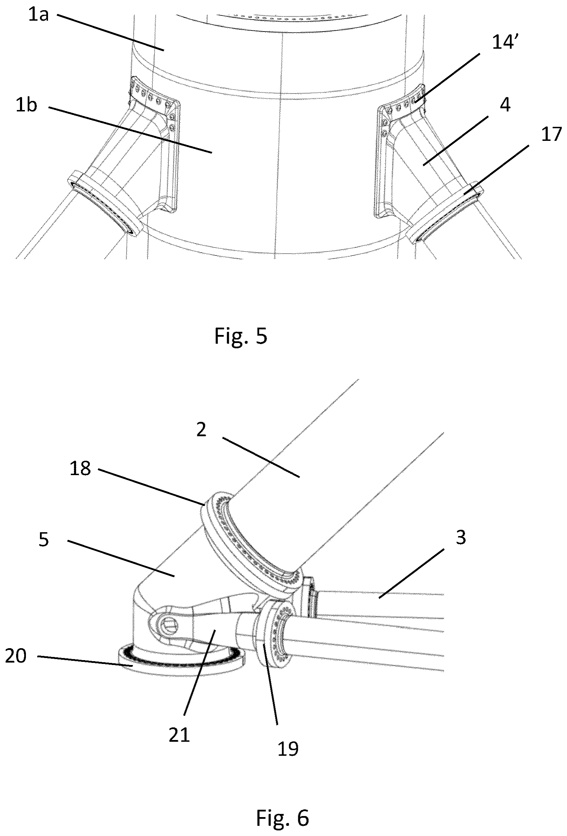

As shown in Figure 5, the bracing connector (4) is secured from the inside with a row of protrusions in the casting (14') that correspond to the upper holes (14) and are added so that the bolts remain blind and allow for a thinner area. The remaining hardware is secured from inside the tubular segment (1) using platforms (7, 8) so that operators can move and screw in the fixing elements corresponding to the side blind holes (16) and the bottom blind holes (15). The bracing connector (4) is joined at the bottom to the top of the bracing post (2) with a circular joint (17).

Figure 6 shows the corner connector (5). All of its ends have a flat circular shape to complete flange-to-flange bolted connections. At the top end, it is connected to the bottom of the bracing post (2) by a circular joint (18). Beyond the top end, it forms an elbow, and two smaller diameter flat circular connections (19) extend radially from its sides, which connect axially to the corresponding horizontal posts (3). The lower end of the corner connector (5) has a circular joint (20) that can be assembled into a foundation, forming the base of the wind turbine, or it can be assembled with truss modules that are inserted below the transition. Two cone-shaped ends (21) extend from the sides of the corner connector (5) and join with the horizontal posts (3) through the narrow circular connection (19). These ends (21) are fully integrated with the corner connector (5) and are part of the same casting.

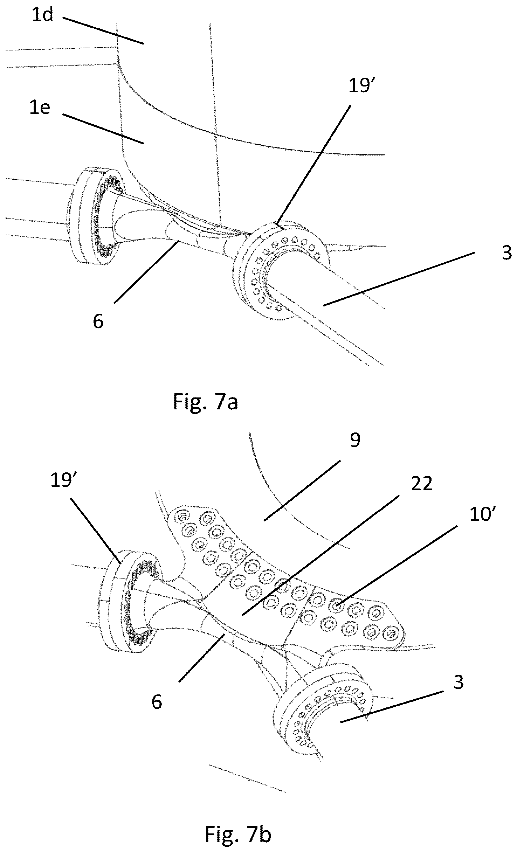

As shown in Figures 7a and 7b, the radial posts (3) connect to the base of the tubular segment (1) at its last ring (1e), the lower ring, by means of the X-shaped casting, the radial connector (6). Said radial connector (6) has two flat circular ends (19') for connecting to the radial posts (3) that are identical to those of its opposite end (19) and a flat V-shaped joint (22) for connecting to the radial platform (9) with three sectors of peripheral through holes (10) that correspond to the holes (10') of said flat joint (22), which is shear-resistant.

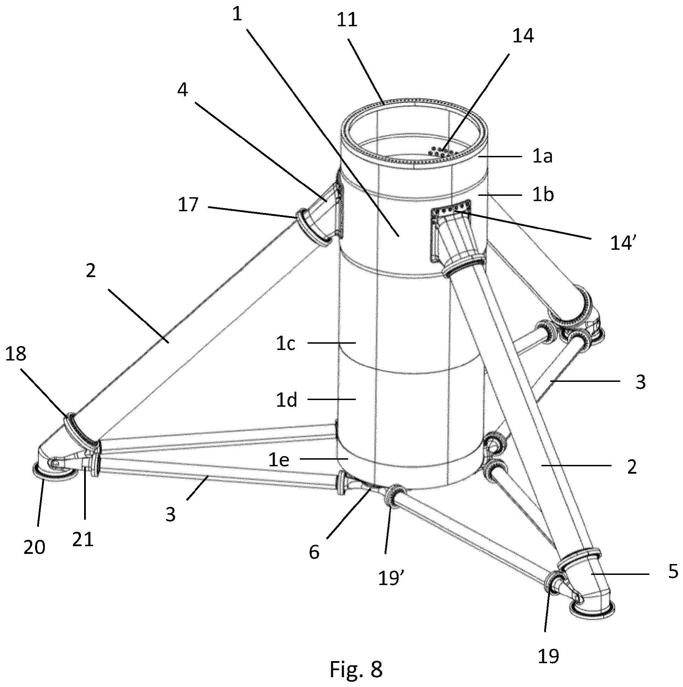

Figure 8 shows the perspective of the transition, the base of which forms an equilateral triangle with a side greater than the height of the tubular segment (1), which facilitates load absorption. The tubular segment (1) is cylindrical with its base at ground level and its bracing posts (2) bolted to the first third of said tubular segment (1). The radial joints (3) extend horizontally and are anchored to the base of the tubular segment (1) by means of the radial connector (6), specifically a flat V-shaped joint (22) with three peripheral through-hole sections (10). The upper part of the tubular segment (1) is free; two platforms (7, 8) are arranged in the upper third, and one platform (9) is arranged at the base. All platforms are parallel to each other and parallel to the ground.

## Claims

1. Transition for a wind turbine that supports a tubular tower crowned by its corresponding nacelle, the hub and the blades, and which has a tripod shape, **characterized in that** it has a relationship with a greater distance between legs than the height of the piece itself and comprising:
- A tubular segment (1) which is a hollow cylindrical formed by several joined rings (1a, 1b, 1c, 1d, 1e), the upper part of which is the tower flange (11), in the first third there are annular platforms (7, 8) and its lower part is a radial base platform (9),
- three bracing posts (2), each with a bracing connector (4) and a corner connector (5),
- six radial posts (3) formed by horizontally arranged tubes, narrower than the bracing posts (2), where:
- the bracing connector (4) is a piece that joins the upper third of the tubular segment (1) by means of a concave rectangular joint bolted from the inside in blind holes and the upper part of the bracing joint (2) with a circular joint (17),
- the corner connector (5) is a cast piece with three circular joints: one to the lower part of the bracing post (2), another to the ground or to the modules that complete the lower truss tower and the third narrow connection (19) to the two radial posts (3) that extend horizontally to the radial connector (6) attached to the tubular segment (1), and where
- the X-shaped radial connector (6) is a piece with two joints: one to the base of the tubular segment (1) and another to the two radial posts (3).

2. Transition according to the preceding claim, **characterized in that** the upper ring (1a) is joined to the tower flange (11), the thickest ring (1b) has three quadrangular joining zones (13), two annular-shaped platforms (7, 8): one for the upper bracing (7) and another for the lower bracing (8) and two plates per window that are arranged perpendicular to the platforms forming intercostals (12), the rings (1c, 1d) are intermediate rings of constant thickness and greater height than the rest, and the lower ring (1e) has at its base a radial platform (9) in annular shape with three sectors of through holes (10) reinforced with several brackets.

3. Transition according to the first claim, **characterized in that** the bracing connector (4) has a concave rectangular shape to join the walls of the tubular segment (1) and the intercostals (12) and the platforms (7,8) existing on the inside reinforce the union that is carried out with screwed unions on the inside with blind holes that correspond to the lateral through holes (16) and the lower through holes (15) and with a row of projections (14') that corresponds to the upper holes (14), which are added so that this area has less thickness and are blind unions.

4. Transition according to claim 1, **characterized in that** the upper end of the corner connector (5) is connected by a circular joint (18) to the lower part of the bracing joint (2), an elbow is formed behind the upper end and two flat circular connections of smaller diameter (19) extend radially from its sides, which connect in shear with the corresponding horizontal joints (3), the lower end of the corner connector (5) has a circular joint (20) to be assembled to a foundation or a truss module and two cone-shaped ends (21) extend from the sides of the corner connector (5) which are joined with the horizontal joints (3) through the circular connection (19).

5. Transition according to claim 1, **characterized in that** the radial joints (3) connect to the lower ring (1e) by means of the X-shaped cast piece, the radial connector (6), which has two flat circular ends (19') to connect to the radial joints (3) and which has a flat V-shaped joint (22) with through holes (10') to connect to the radial platform (9).

6. Transition according to the first claim, **characterized in that** all the platforms (7, 8 and 9) have an internal hole to allow the passage of the tension cables and the elevator and maintenance ladder of the wind turbine.
